# EUROPÄISCHE PATENTSCHRIFT

(11) **EP 3 174 755 B1**
(45) Veröffentlichungstag und Bekanntmachung des Hinweises auf die Patenterteilung: **26.06.2019**
(21) Anmeldenummer: 15738015.5
(22) Anmeldetag: 07.07.2015
(51) Int. Cl.: B60L 3/00

(54) **MODULARES BATTERIESYSTEM UND ELEKTRISCH ANGETRIEBENES ZWEIRAD MIT SOLCHEM BATTERIESYSTEM**
MODULAR BATTERY SYSTEM AND ELECTRICALLY DRIVEN TWO-WHEELER WITH SUCH BATTERY SYSTEM
SYSTÈME DE BATTERIE MODULAIRE ET DEUX-ROUES ELECTRIQUE AVEC UN TEL SYSTÈME DE BATTERIE

(30) Priorität: 31.07.2014 DE 102014215035
(43) Veröffentlichungstag der Anmeldung: 07.06.2017
(73) Patentinhaber: Bayerische Motoren Werke Aktiengesellschaft, 80809 München (DE)
(72) Erfinder: LOPEZ DE ARROYABE, Jose, 81541 München (DE)
(86) Internationale Anmeldenummer: PCT/EP2015/065457
(87) Internationale Veröffentlichungsnummer: WO 2016/015959

(56) Entgegenhaltungen:
- EP-A1- 2 560 265
- EP-A1- 2 738 863
- EP-A2- 2 565 959
- DE-A1-102010 030 353
- US-A1- 2003 133 282
- US-A1- 2013 088 237
- Thomas Schlick ET AL: "Zukunftsfeld Energiespeicher Marktpotenziale standardisierter Lithium-Ionen-Batteriesysteme", , 12. September 2012 (2012-09-12), XP055217579, http://www.rolandberger.com/media/publicat ions/2012-09-12-rbsc-pub-Energy_Storage_Zu kunftsfeld_Energiespeicher.html Gefunden im Internet: URL:http://www.rolandberger.com/media/pdf/ Roland_Berger_Zukunftsfeld_Energiespeicher _20120912.pdf [gefunden am 2015-10-01]
- Lithionics .Battery LLC: "Lithionics Battery's Modular Battery System", , 7. Januar 2013 (2013-01-07), XP054976108, Gefunden im Internet: URL:https://www.youtube.com/watch?v=yttC16 LuMM0 [gefunden am 2015-10-02]

## Beschreibung

Die Erfindung betrifft ein Batteriesystem für ein elektrisch angetriebenes Fahrzeug gemäß dem Oberbegriff des Anspruch 1 und ein elektrisch angetriebenes Zweirad mit einem derartigen Batteriesystem.

In elektrisch angetriebenen Fahrzeugen, sowohl in Personenkraftwagen als auch in Motorrädern oder Motorrollern, werden Batteriemodule eingesetzt, in denen jeweils mehrere Batteriezellen zu einem Batteriestapel zusammengefasst sind, wobei die Batteriezellen in Serie verschaltet sind, um die gewünschte Spannung zu liefern.

In der gattungsgemäßen EP 2 560 265 A1 wird vorgeschlagen, mehrere Batteriemodule miteinander zu verschalten und mit einer einzigen, separat von den Batteriemodulen platzierten Batteriesteuereinheit zu verbinden, die auch mit der Fahrzeugelektronik verbunden ist, wobei nur eines der Batteriemodule direkt mit der Batteriesteuereinheit kommuniziert.

Die EP 2 738 863 A1 zeigt ein ähnliches System. Dort ist die Batteriesteuereinheit außen an das Hauptmodul angesetzt.

Gerade bei elektrisch angetriebenen Zweirädern wie Motorrädern oder Motorrollern ist jedoch der zur Verfügung stehende Platz für das Batteriesystem sehr begrenzt.

Aufgabe der Erfindung ist es, ein flexibel einsetzbares, bauraumoptimiertes Batteriesystem insbesondere für ein elektrisch angetriebenes Zweirad zu schaffen.

Dies wird mit einem Batteriesystem für ein elektrisch angetriebenes Fahrzeug mit den Merkmalen des Anspruchs 1 erreicht. Die Aufteilung der Gesamtanzahl an Batteriezellen auf Haupt- und Nebenmodule erlaubt einen einfachen modularen Aufbau des Batteriesystems, der flexibel skaliert werden kann und einfach auf unterschiedliche Gegebenheiten, beispielsweise unterschiedliche Fahrzeugtypen und Motorisierungen angepasst werden kann. Das Hauptmodul übernimmt einen Großteil der elektronischen Ansteuerung sowie die Kommunikation mit der Fahrzeugelektronik, sodass diese Elektronikkomponenten in dem oder den Nebenmodulen nicht verdoppelt werden müssen und der Aufwand für die Verschaltung der Nebenmodule reduziert werden kann.

Um die Flexibilität der Modulbauweise optimal ausschöpfen zu können, sind vorzugsweise die Batteriezellen des Hauptmoduls und die des Nebenmoduls in getrennten Gehäusen aufgenommen. Die Gehäuse des Hauptmoduls und des Nebenmoduls haben vorzugsweise im Wesentlichen die gleichen Abmessungen, sodass Batteriesysteme verwirklicht werden können, die unterschiedliche Anzahlen von Haupt- und Nebenmodulen aufweisen und dennoch im gleichen Aufnahmeraum untergebracht werden können.

In einer möglichen Anordnung sind mehrere Nebenmodule in Reihe mit einem Hauptmodul geschaltet, sodass die Gesamtspannung des Systems durch die Nebenmodule erhöht wird.

In einer anderen Anordnung sind mehrere Hauptmodule vorgesehen, die parallel geschaltet sind, wobei die Hauptmodule vorzugsweise jeweils wenigstens ein Nebenmodul aufweisen. Mit dieser Anordnung lässt sich die Gesamtstromstärke des Batteriesystems erhöhen.

Das Batteriesystem ist vorzugsweise als Niedervoltsystem mit Gesamtspannungen unter 60 Volt ausgelegt. Dies hat den Vorteil, dass die elektrischen Verbindungen weniger aufwendig- als bei Hochvoltsystemen gestaltet werden können. Beispielsweise können einfachere Stecker verwendet werden. Natürlich kann das Batteriesystem auch mit höheren Spannungen, insbesondere im Hochvoltbereich, realisiert sein, Hierzu kann z.B. die Anzahl der einzelnen Batteriezellen pro Batteriestapel erhöht und/oder mehrere Nebenmodule mit einem Hauptmodul in Serie geschaltet werden.

Vorzugsweise verfügt jedes Hauptmodul und jedes Nebenmodul über eine eigene Sicherung. Bei Ausfall eines Moduls spricht gezielt die Sicherung des jeweiligen Moduls an, was eine Diagnose und eine Reparatur vereinfacht.

Jedes Hauptmodul und jedes Nebenmodul verfügt über eine eigene Zellüberwachungseinheit (CSC). Mit dieser Gestaltung kann ein Kompromiss zwischen Integration und Modulgehäusegröße eingegangen werden, indem nicht die gesamte Elektronik des Batteriesystems in das Hauptmodul integriert wird. Außerdem vereinfacht sich durch die Zuordnung einer eigenen Zellüberwachungseinheit die Verschaltung der einzelnen Module untereinander sowie die Diagnostik.

Die Zellüberwachungseinheiten aller Module sind vorzugsweise galvanisch voneinander entkoppelt, sodass Überspannungen in einem Modul für das Gesamtsystem unschädlich sind.

Im Hauptmodul ist zusätzlich zu der Zellüberwachungseinheit eine Batteriesystemsteuerung vorgesehen, die beispielsweise eine Lastverteilung über sämtliche Module des Batteriesystems (Haupt- und Nebenmodule) überwachen und verändern kann und die mit einer Fahrzeugelektronik kommuniziert, welche beispielsweise Lastanforderungen vorgibt.

Es ist vorteilhaft, wenn die Stromversorgung der Zellüberwachungseinheiten aus den Batteriezellen des jeweiligen Moduls erfolgen kann. Auf diese Weise ist auch bei Ansprechen der Sicherung des jeweiligen Moduls noch eine Diagnostik für das jeweilige Modul und die Weitergabe der Diagnosedaten nach außen möglich.

Als Absicherung des gesamten Batteriesystems kann in der Verbindungsleitung der Batteriezellen des Hauptmoduls mit den Batteriezellen des Nebenmoduls ein Schütz, insbesondere ein Halbleiterschütz, angeordnet sein, das bei einer Fehlfunktion anspricht und das Batteriesystem vor Beschädigungen bewahrt.

Ein derartiges beschriebenes Batteriesystem kann vorteilhaft in einem elektrisch angetriebenen Zweirad, insbesondere einem Motorrad oder Motorroller eingesetzt werden. Einzelne, kleinere Gehäuse mehrerer Module sind dort einfacher zu verbauen als ein komplettes, großes Modul. Durch eine unterschiedliche Kombination von Haupt- und Nebenmodulen können verschiedene elektrische Leistungen realisiert werden, ohne dass der Aufnahmeraum für das Batteriesystem oder der Anschluss des Batteriesystems an die Fahrzeugelektronik verändert werden müssten.

Die Erfindung wird nachfolgend anhand mehrerer Ausführungsbeispiele mit Bezug auf die beigefügten Zeichnungen näher beschrieben. In den Zeichnungen zeigen:
- Figur 1 ein schematisches Schaltbild eines erfindungsgemäßen Batteriesystems;
- Figur 2 eine schematische Darstellung eines erfindungsgemäßen Batteriesystems gemäß einer ersten Variante; und
- Figur 3 eine schematische Darstellung eines erfindungsgemäßen Batteriesystems gemäß einer zweiten Variante.

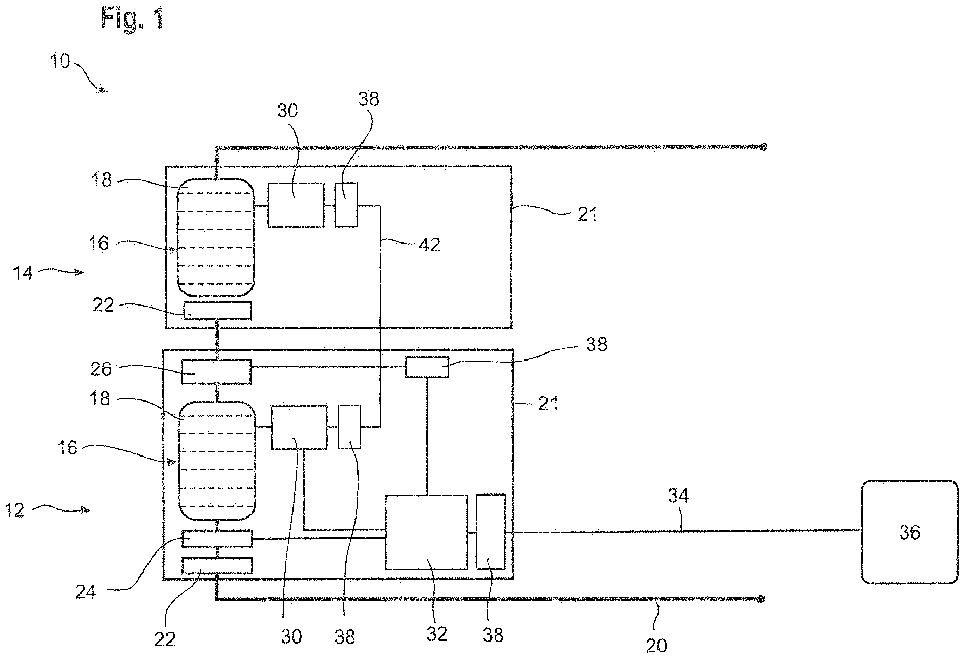

Figur 1 zeigt ein modular aufgebautes Batteriesystem 10, bei dem beispielhaft ein einziges Hauptmodul 12 mit einem einzigen Nebenmodul 14 verschaltet ist.

Das Hauptmodul 12 hat einen Batteriestapel 16, in dem mehrere einzelne Batteriezellen 18 zusammengefasst sind. Der Batteriestapel 16 ist mit einer elektrischen Anschlussleitung 20 verbunden, die zu einem nicht näher dargestellten elektrischen Antrieb eines Fahrzeugs führt.

Das Hauptmodul 12 ist durch ein Gehäuse 21 wasserdicht gegenüber der Umgebung abschlossen.

In der elektrischen Anschlussleitung 20 ist im Hauptmodul 12 eine Sicherung 22 vorgesehen. Bei Ansprechen der Sicherung 22 wird der Stromfluss auf der gesamten Anschlussleitung 20 unterbrochen, wobei die Sicherung 22 so ausgelegt sein kann, dass sie danach ausgetauscht werden muss. Außerdem ist in der Anschlussleitung 20 ein Stromstärkesensor 24 angeordnet. Zusätzlich liegt in der Anschlussleitung 20 im Hauptmodul 12 noch ein Halbleiterschütz 26, das den Stromfluss auf der gesamten Anschlussleitung 20 reversibel unterbrechen kann.

Zum Hauptmodul 12 gehören außerdem eine Zellüberwachungseinheit 30 für den Batteriestapel 16 und eine Batteriesystemsteuerung 32. Die Zellüberwachungseinheit 30 ist innerhalb des Hauptmoduls 12 mit der Batteriesystemsteuerung 32 verbunden und kommuniziert mit dieser. Die Batteriesystemsteuerung 32 übernimmt z.B. den Lastausgleich der einzelnen Batteriezellen 18 sämtlicher Module 12, 14.

Die Batteriesystemsteuerung 32 kommuniziert über eine elektrische Verbindung 34 mit einer Fahrzeugelektronik 36 außerhalb des Batteriesystems 10, wobei eine galvanische Trennung 38 zwischen der Batteriesystemsteuerung 32 und der Fahrzeugelektronik 36 vorgesehen ist. In diesem Beispiel erfolgt die Kommunikation des Hauptmoduls 12 mit der Fahrzeugelektronik 36 über einen CAN-Bus.

Das Halbleiterschütz 26 ist mit der Batteriesystemsteuerung 32 verbunden und kann mit dieser kommunizieren, wobei auch hier eine galvanische Trennung 38, z.B. in Form eines Optokopplers, vorgesehen ist. Durch die Integration des Halbleiterschützes 26 in das Hauptmodul 12 werden die Steuersignale für das Halbleiterschütz 26 in der Nähe der Batteriesystemsteuerung 32 generiert, sodass die Schaltung weniger empfindlich gegen Einstrahlungen ist.

Die gesamte Elektronik des Hauptmoduls 12 ist in diesem Beispiel auf zwei Platinen verteilt (nicht dargestellt). Dabei ist eine Hauptplatine vorgesehen, die sämtliche Komponenten umfasst, die nicht mit dem Halbleiterschütz 26 zusammenhängen, und eine separate Halbleiterschützplatine für die damit in Verbindung stehenden Komponenten (hier die eigentliche Halbleiterschaltung, ein Mikroprozessor mit Treibersoftware sowie der Optokoppler der galvanischen Trennung 38). Zur Kühlung der auf der Halbleiterschützplatine verwendeten Leistungselektronik kann diese Platine z.B. direkt an der Innenwand des Gehäuses 21 montiert sein, sodass gegebenenfalls auf weitere Kühlsysteme verzichtet werden kann.

Das Nebenmodul 14 weist genau wie das Hauptmodul 12 einen Batteriestapel 16 aus mehreren einzelnen Batteriezellen 18 auf. Die Anzahl der einzelnen Batteriezellen 18 ist hier gleich der des Hauptmoduls 12 gewählt, wobei beispielsweise jeweils sieben Zellen vorgesehen sind. Es ist aber auch möglich, eine unterschiedliche Anzahl von Batteriezellen 18 für das Hauptmodul 12 und das Nebenmodul 14 zu verwenden.

Das Nebenmodul 14 verfügt über ein eigenes Gehäuse 21. In diesem Beispiel sind die Gehäuse 21 von Hauptmodul 12 und Nebenmodul 14 gleich groß mit identischen Abmessungen gewählt, um eine größtmögliche Flexibilität im modularen Aufbau des Batteriesystems 10 zu ermöglichen.

Im Gehäuse 21 des Nebenmoduls 14 sind neben dem Batteriestapel 16 außerdem eine eigene Sicherung 22 sowie eine eigene Zellüberwachungseinheit 30 für den Batteriestapel 16 vorgesehen. Die Elektronik des Nebenmoduls 14 ist hier vollständig auf einer einzigen Platine zusammengefasst (nicht dargestellt).

Die beiden Zellüberwachungseinheiten 30 des Hauptmoduls 12 und des Nebenmoduls 14 sind über eine Verbindung 42 miteinander verbunden und können miteinander kommunizieren, wobei jede der Zellüberwachungseinheiten 30 von der Verbindung 42 durch eine galvanische Trennung 38, beispielsweise in Form eines Optokopplers, entkoppelt ist.

Die Batteriestapel 16 des Hauptmoduls 12 und des Nebenmoduls 14 sind entlang der Anschlussleitung 20 in Serie geschaltet, sodass sich die Spannungen der beiden Batteriestapel 16 addieren und die Gesamtspannung als Ausgangsspannung auf der elektrischen Anschlussleitung 20 zur Verfügung steht.

Das Nebenmodul 14 hat hier eine höhere Ausgleichsstromkapazität, um einen erhöhten Verbrauch im Hauptmodul 12 möglichst schnell zu kompensieren.

Das Nebenmodul 14 ist mit der Fahrzeugelektronik 36 nicht direkt verbunden, sondern lediglich über das Hauptmodul 12 in Form einer Daisy Chain über die Verbindung 42, die hier für eine differenzielle serielle Kommunikation ausgelegt ist. Die Verschaltung ist in den Figuren stark vereinfacht dargestellt. Neben der gezeigten Kommunikation der Zellüberwachungseinheiten 30 miteinander kann auch eine Kommunikation der Zellüberwachungseinheit 30 des Nebenmoduls 14 mit der Batteriesystemsteuerung 32 im Hauptmodul 12 erfolgen.

Die Zellüberwachungseinheit 30 jedes Moduls 12, 14 ist so mit dem zugehörigen Batteriestapel 16 verbunden, dass dieser als Stromversorgung eingesetzt werden kann. Dies ist nützlich, wenn die Sicherung 22 anspricht und das jeweilige Modul 14 von der Anschlussleitung 20 und somit vom restlichen Batteriesystem 10 abgekoppelt ist. Auch in diesem Fall ist eine Stromversorgung der Zellüberwachungseinheit 30 noch durch den Batteriestapel 16 des jeweiligen Moduls gegeben, sodass über die Kommunikation mit dem Hauptmodul 12 und über dieses mit der Fahrzeugelektronik 36 eine Diagnose des fehlerhaften Nebenmoduls 14 erfolgen kann. Insbesondere bei der Verwendung mehrerer Nebenmodule 14 ist das fehlerhafte Nebenmodul 14 so einfach identifizierbar.

Im Fall eines Fehlers im Hauptmodul 12 kann auch hier die Elektronik, insbesondere die Zellüberwachungseinheit 30 und das Batteriesystemsteuerung 32, vom Batteriestapel 16 des Hauptmoduls 12 versorgt werden. Im Normalbetrieb wird die Elektronik hingegen vom gesamten Batteriesystem 10 versorgt, sodass alle Batteriezellen 18 des Batteriesystems 10 gleichmäßig belastet werden. Hierzu kann ein Anschluss an die Verbindung 42 vorgesehen sein.

Sowohl das Hauptmodul 12 als auch das Nebenmodul 14 können für eine Niedervolttechnologie unter 60 Volt, aber auch für Hochvoltanwendungen ausgelegt sein. Bleibt das Batteriesystem 10 unter der 60-Volt-Grenze bleiben, ist die Verwendung von Niedervoltkomponenten möglich.

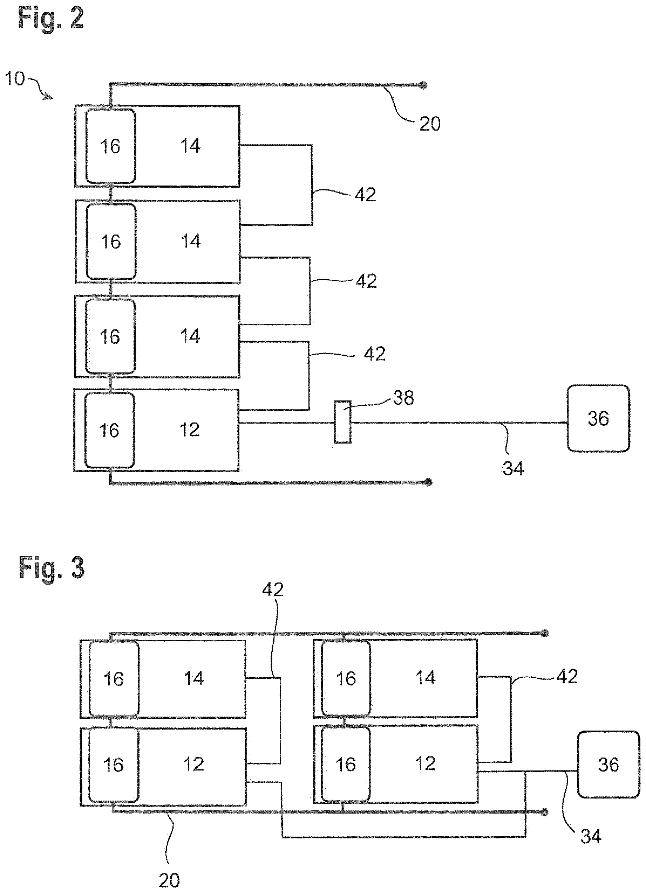

Figur 2 zeigt einen ersten möglichen Aufbau eines Batteriesystems 10.

Hier sind mehrere Nebenmodule 14, im gezeigten Beispiel drei Nebenmodule 14, in Serie mit einem einzigen Hauptmodul 12 so verbunden, dass die Batteriestapel 16 der Module 12, 14 in Reihe geschaltet sind. An der elektrischen Anschlussleitung 20 liegt daher als Ausgangsspannung die Summe der Spannung sämtlicher Batteriestapel 16 aller Module 12, 14 an.

Die Nebenmodule 14, insbesondere deren Zellüberwachungseinheiten 30, kommunizieren jeweils über eine Verbindung 42 nur mit dem direkt benachbarten Nebenmodul 14 bzw. beim ersten Nebenmodul 14 in der Kette mit dem Hauptmodul 12. Nur das Hauptmodul 12 ist direkt mit der Fahrzeugelektronik 36 verbunden.

Der Aufbau des Hauptmoduls 12 und der Nebenmodule 14 entspricht dem in Figur 1 dargestellten und beschriebenen.

Figur 3 zeigt eine zweite Möglichkeit des Aufbaus eines Batteriesystems 10.

In diesem Fall sind zwei Gruppen aus je einem Hauptmodul 12 und einem damit seriell verbundenen Nebenmodul 14 parallel geschaltet, sodass an der elektrischen Anschlussleitung 20 eine höhere Stromstärke aufgrund der Parallelschaltung der Batteriestapel 16 der einzelnen Gruppen zur Verfügung steht.

Im gezeigten Beispiel ist jeweils nur ein Nebenmodul 14 mit dem jeweiligen Hauptmodul 12 in Reihe geschaltet, es könnten aber auch beliebige weitere Nebenmodule 14 in jeder Gruppe vorgesehen sein.

Auch in diesem Fall kommuniziert jedes der Nebenmodule 14 lediglich mit seinem direkt verbundenen, benachbarten Modul, hier jeweils dem Hauptmodul 12.

Die Hauptmodule 12 kommunizieren untereinander über eine Verbindung 34, die alle Hauptmodule 12 parallel mit der Fahrzeugelektronik 36 verbindet.

Die Verkabelung zwischen den einzelnen Modulen 12, 14 wird möglichst kurz gehalten. Durch die Verbindung der Nebenmodule 14 mit dem Hauptmodul 12 ist jeweils nur eine kurze Verbindung zwischen den Batteriestapeln 16 sowie eine Kommunikations- bzw. Datenverbindung 42 notwendig.

Unabhängig vom exakten Aufbau des Batteriesystems 10 ist der Anschluss an die Fahrzeugelektronik 36 immer über eine einzelne Verbindung 34 realisierbar.

Da die Gehäuse 21 sämtlicher Module 12, 14 dieselben Abmessungen haben, ist der Platzbedarf für die beiden in den Figuren 2 und 3 dargestellten Varianten identisch, und die jeweiligen Module 12, 14 müssen nur entsprechend der gewünschten Anordnung miteinander verschaltet werden.

Durch die Flexibilität des modularen Batteriesystems 10 ist es möglich, für jedes Fahrzeug individuell eine Lösung zu finden, die aus einer geeigneten Anzahl an Hauptmodulen 12 und Nebenmodulen 14 zusammengesetzt ist.

Das Batteriesystem 10 ist hier in einem elektrisch angetriebenen Zweirad wie einem Motorrad oder Motorroller eingesetzt, wo die Verteilung auf mehrere relativ kleine Gehäuse 21 es erlaubt, das geringe Platzangebot optimal auszuschöpfen. Außerdem ist es möglich, mit einer Luftkühlung für die Module 12, 14 auszukommen, ohne dass eine aufwendige Flüssigkeitskühlung eingebaut werden muss.

## Patentansprüche

1. Batteriesystem für ein elektrisch angetriebenes Fahrzeug, mit wenigstens einem Hauptmodul (12), das mehrere Batteriezellen (18) umfasst und das mit wenigstens einem Nebenmodul (14) verbunden ist, das mehrere Batteriezellen (18) umfasst, wobei das Hauptmodul (12) direkt und das Nebenmodul (14) nur über das Hauptmodul (12) mit einer Fahrzeugelektronik (36) verbunden ist,
**dadurch gekennzeichnet, dass**
das wenigstens eine Hauptmodul (12) eine Batteriesystemsteuerung (32) und ein in der Verbindungsleitung der Batteriezellen (18) des Hauptmoduls (12) mit den Batteriezellen (18) des Nebenmoduls (14) angeordnetes Schütz (26) aufweist, wobei die Batteriesystemsteuerung (32) mit der Fahrzeugelektronik (36) sowie mit dem Schütz (26) verbunden ist, und wobei die Batteriezellen (18), die Batteriesteuerungseinrichtung (32) und das Schütz (26) des Hauptmoduls (12) und die Batteriezellen (18) des Nebenmoduls (14) in getrennten Gehäusen (21) aufgenommen sind.

2. Batteriesystem nach Anspruch 1, **dadurch gekennzeichnet, dass** die Gehäuse (21) des Hauptmoduls (12) und des Nebenmoduls (14) die gleichen Abmessungen haben.

3. Batteriesystem nach einem der vorhergehenden Ansprüche, **dadurch gekennzeichnet, dass** mehrere Nebenmodule (14) in Reihe mit einem Hauptmodul (12) geschaltet sind.

4. Batteriesystem nach einem der vorhergehenden Ansprüche, **dadurch gekennzeichnet, dass** mehrere Hauptmodule (12) vorgesehen sind, die parallel geschaltet sind.

5. Batteriesystem nach einem der vorhergehenden Ansprüche, **dadurch gekennzeichnet, dass** jedes Hauptmodul (12) und jedes Nebenmodul (14) über eine eigene Sicherung (22) verfügt.

6. Batteriesystem nach einem der vorhergehenden Ansprüche, **dadurch gekennzeichnet, dass** jedes Hauptmodul (12) und jedes Nebenmodul (14) über eine eigene Zellüberwachungseinheit (CSC) (30) verfügen.

7. Batteriesystem nach Anspruch 6, **dadurch gekennzeichnet, dass** die Zellüberwachungseinheiten (30) aller Module (12, 14) galvanisch voneinander entkoppelt sind.

8. Batteriesystem nach Anspruch 6 oder 7, **dadurch gekennzeichnet, dass** die Stromversorgung der Zellüberwachungseinheiten (30) aus den Batteriezellen (18) des jeweiligen Moduls (12, 14) erfolgen kann.

9. Elektrisch angetriebenes Zweirad, insbesondere Motorrad oder Motorroller, mit einem Batteriesystem (10) nach einem der vorhergehenden Ansprüche.

## Claims

1. A battery system for an electrically driven vehicle, with at least one main module (12) which comprises a plurality of battery cells (18) and which is connected to at least one secondary module (14) which comprises a plurality of battery cells (18), wherein the main module (12) is connected directly, and the secondary module (14) only via the main module (12), to vehicle electronics (36),
**characterised in that**
the at least one main module (12) has a battery system control unit (32) and a contactor (26) arranged in the line connecting the battery cells (18) of the main module (12) to the battery cells (18) of the secondary module (14), the battery system control unit (32) being connected to the vehicle electronics (36) and also to the contactor (26), and the battery cells (18), the battery control means (32) and the contactor (26) of the main module (12) and the battery cells (18) of the secondary module (14) being accommodated in separate housings (21).

2. A battery system according to Claim 1, **characterised in that** the housings (21) of the main module (12) and of the secondary module (14) have the same dimensions.

3. A battery system according to one of the preceding claims, **characterised in that** a plurality of secondary modules (14) are connected in series with a main module (12).

4. A battery system according to one of the preceding claims, **characterised in that** a plurality of main modules (12) which are connected in parallel are provided.

5. A battery system according to one of the preceding claims, **characterised in that** each main module (12) and each secondary module (14) has its own fuse (22).

6. A battery system according to one of the preceding claims, **characterised in that** each main module (12) and each secondary module (14) has its own cell supervision unit (CSC) (30).

7. A battery system according to Claim 6, **characterised in that** the cell supervision units (30) of all the modules (12, 14) are galvanically isolated from each other.

8. A battery system according to Claim 6 or Claim 7, **characterised in that** the cell supervision units (30) can be supplied with current from the battery cells (18) of the respective module (12, 14).

9. An electrically driven bicycle, especially motorcycle or motor scooter, with a battery system (10) according to one of the preceding claims.

## Revendications

1. Système de batterie destiné à un véhicule à entraînement électrique ayant au moins un module principal (12) qui comporte plusieurs cellules de batterie (18) et qui est relié à au moins un module auxiliaire (14) qui comporte plusieurs cellules de batterie (18), le module principal (12) étant directement relié au système électronique du véhicule (36) tandis que le module auxiliaire (14) n'y est relié que par l'intermédiaire du module principal (12),
**caractérisé en ce que**
le module principal (12) comporte une commande du système de batterie (32) et une protection (26) montée dans la conduite de liaison des cellules de batterie (18) du module principal (12) avec les cellules de batterie (18) du module auxiliaire (14), la commande du système de batterie (32) étant reliée au système électronique du véhicule (36) ainsi qu'à la protection (26), et les cellules de batterie (18) la commande du système de batterie (32) et la protection (26) du module principal (12) ainsi que les cellules de batterie (18) du module auxiliaire (14) étant logés dans des boîtiers (21) séparés.

2. Système de batterie conforme à la revendication 1,
**caractérisé en ce que**
les boîtiers (21) du module principal (12) et du module auxiliaire (14) ont les mêmes dimensions.

3. Système de batterie conforme à l'une des revendications précédentes,
**caractérisé en ce que**
plusieurs modules auxiliaires (14) sont branchés en série avec un module principal (12).

4. Système de batterie conforme à l'une des revendications précédentes,
**caractérisé en ce qu'**
il est prévu plusieurs modules principaux (12) qui sont branchés en parallèle.

5. Système de batterie conforme à l'une des revendications précédentes,
**caractérisé en ce que**
chaque module principal (12) et chaque module auxiliaire (14) dispose d'une sécurité propre (22).

6. Système de batterie conforme à l'une des revendications précédentes,
**caractérisé en ce que**
chaque module principal (12) et chaque module auxiliaire (14) dispose d'une unité de surveillance de cellule propre (CSC) (30).

7. Système de batterie conforme à la revendication 6,
**caractérisé en ce que**
les unités de surveillance de cellule (30) de tous les modules (12, 14) sont découplées galvaniquement les unes des autres.

8. Système de batterie conforme à la revendication 6 ou 7,
**caractérisé en ce que**
l'alimentation en courant des unités de surveillance de cellule (30) peut être effectuée à partir des cellules de batterie (18) de chaque module (12, 14).

9. Véhicule à deux roues à entraînement électrique, en particulier moto ou scooter équipé d'un système de batterie (10) conforme à l'une des revendications précédentes.
